# EUROPÄISCHE PATENTSCHRIFT

(11) **EP 2 789 496 B1**
(45) Veröffentlichungstag und Bekanntmachung des Hinweises auf die Patenterteilung: **31.07.2019**
(21) Anmeldenummer: 13004145.2
(22) Anmeldetag: 22.08.2013
(51) Int. Cl.: B60L 50/16, B60L 58/21, B60L 50/64, H02J 7/00

(54) **Batterieanordnung für ein elektrisch antreibbares Kraftfahrzeug**
Battery assembly for an electrically operated motor vehicle
Agencement de batterie pour un véhicule automobile pouvant être entraîné électriquement

(30) Priorität: 18.12.2012 DE 102012024837
(43) Veröffentlichungstag der Anmeldung: 15.10.2014
(73) Patentinhaber: MAN Truck & Bus SE, 80995 München (DE)
(72) Erfinder: Müller, Anton, 82327 Tutzing (DE)
(74) Vertreter: v. Bezold & Partner Patentanwälte - PartG mbB

(56) Entgegenhaltungen:
- EP-A1- 2 113 410
- FR-A1- 2 834 249
- JP-A- 2008 149 897

## Beschreibung

Die Erfindung betrifft eine Batterieanordnung, insbesondere für ein elektrisch antreibbares Kraftfahrzeug.

Bei elektrisch antreibbaren Kraftfahrzeugen (z.B. Hybride) bzw. bei Anwendungen mit größeren Leistungen reicht die Batteriespannung von 250-400 Volt nicht aus, um einen elektrischen Antriebsmotor effizient zu betreiben. Für derartige elektrisch antreibbare Kraftfahrzeuge sind deshalb mehrzellige Batterieanordnungen bekannt, bei denen eine erhöhte Zahl von Zellen elektrisch in Reihe geschaltet ist, was zu einer entsprechend höheren Batteriespannung führt. Im Gegensatz zu herkömmlichen Kfz-Batterien sind hierbei sowohl der Hinleiter als auch der Rückleiter elektrisch isoliert ausgeführt, d.h. die Kraftfahrzeugkarosserie bildet als Massepotential keinen Rückleiter.

Problematisch an derartigen mehrzelligen Batterieanordnungen ist die Tatsache, dass sie nicht in großer Stückzahl mit den entsprechenden Kosten aus der PKW-Welt, die mit 250-400V arbeitet, verfügbar sind.

Ferner ist zum Stand der Technik auf die Druckschriften JP 2008 149897 A, EP 2 113 410 A1 und FR 2 834 249 A1 hinzuweisen, wobei die Druckschrift JP 2008 149897 A als nächstliegender Stand der Technik angesehen wird und die Präambel des unabhängigen Anspruchs 1 offenbart.

Der Erfindung liegt deshalb die Aufgabe zugrunde, das vorstehend genannte Problem mit einer Reihenschaltung von PKW-Batterien mit 250-400V Spannungsniveau zu lösen.

Diese Aufgabe wird durch eine erfindungsgemäße Batterieanordnung gemäß dem Hauptanspruch gelöst.

Die erfindungsgemäße Batterieanordnung weist mindestens zwei elektrische Batterien auf, die elektrisch in Reihe geschaltet sind, um eine entsprechend höhere Batteriespannung zu erzielen. Bei den einzelnen in Reihe geschalteten Batterien kann es sich um Lithium-Ionen-Batterien handeln, die relativ kostengünstig sind, aber für die bei höheren Leistungen geringe Batteriespannung von ca. 250-400V ausgelegt sind.

Zur elektrischen Kontaktierung weist die erfindungsgemäße Batterieanordnung einen plusseitigen Anschluss und einen minusseitigen Anschluss auf, wobei an den plusseitigen Anschluss ein Hinleiter zu einem Verbraucher angeschlossen werden kann, während an dem minusseitigen Anschluss der Batterieanordnung ein Rückleiter von dem Verbraucher angeschlossen werden kann. Bei der erfindungsgemäßen Batterieanordnung bildet die Kraftfahrzeugkarosserie als Massepotential also keinen Rückleiter, da zur Rückleitung des Stroms zu der Batterieanordnung ein separater minusseitiger Anschluss und ein elektrisch isolierter Rückleiter vorgesehen ist.

Darüber hinaus weist die erfindungsgemäße Batterieanordnung einen Verbindungspunkt zwischen den in Reihe geschalteten Batterien auf, der zur elektrischen Kontaktierung der Batterieanordnung genutzt werden kann. An dem Verbindungspunkt sind die in Reihe geschalteten Batterien also elektrisch miteinander verbunden.

Gemäß der Erfindung ist vorgesehen, dass der minusseitige Anschluss der Batterieanordnung elektrisch von dem Massepotential (z.B. Kraftfahrzeugkarosserie) getrennt ist, so dass die Batterieanordnung an sich ein schwimmendes elektrisches Potential aufweist. Zur Erhaltung des Massebezugs der Batterieanordnung ist gemäß der Erfindung vorgesehen, dass der Verbindungspunkt zwischen den beiden Batterien mit dem Massepotential (z.B. Kraftfahrzeugkarosserie) verbunden ist, wodurch der Verbindungspunkt und damit auch das Potential der Batterieanordnung an das Massepotential angebunden wird.

Für den Bezug der hochfrequenten Anteile des Potentials erfolgt die Verbindung zwischen dem Verbindungspunkt der Batterieanordnung einerseits und dem Massepotential andererseits vorzugsweise über einen Kondensator, der diese Wechselanteile abführt.

Zur Vermeidung des Wegdriftens des Potentials der Batterieanordnung durch Gleichanteile kann aber die elektrische Verbindung zwischen dem Verbindungspunkt der Batterieanordnung einerseits und dem Massepotential (z.B. Kraftfahrzeugkarosserie) andererseits auch über eine hochohmige Verbindung erfolgen, um derartige Gleichanteile abzuführen. Beispielsweise kann zwischen dem Verbindungspunkt der Batterieanordnung und dem Massepotential ein hochohmiger Widerstand geschaltet sein.

In einer Ausführung der Erfindung erfolgt die Verbindung zwischen dem Verbindungspunkt einerseits und dem Massepotential andererseits jedoch durch eine Parallelschaltung aus einem Kondensator und einem hochohmigen Widerstand, so dass sowohl Gleichanteile als auch Wechselanteile berücksichtigt werden.

Schließlich ist noch zu erwähnen, dass die Erfindung auch ein komplettes Kraftfahrzeug mit einem solchen erfindungsgemäßen Antriebsbordnetz aufweist. Beispielsweise kann es sich bei dem Kraftfahrzeug um ein Nutzfahrzeug handeln, wie beispielsweise ein Lastkraftwagen oder ein Omnibus.

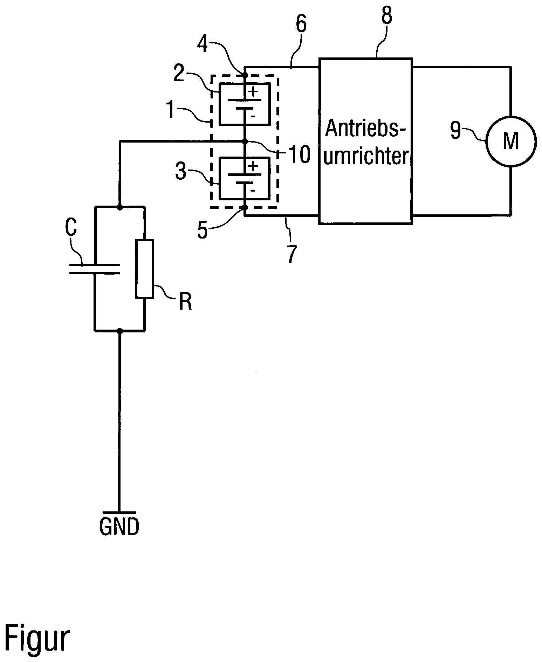

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Zeichnung näher erläutert.

So zeigt die Figur ein Nutzfahrzeug (z.B. Lastkraftwagen, Omnibus) mit einem erfindungsgemäßen Antriebsbordnetz.

Das Antriebsbordnetz weist eine erfindungsgemäße Batterieanordnung 1 auf, wobei die Batterieanordnung 1 zwei herkömmliche Batterien 2, 3 enthält, die elektrisch in Reihe geschaltet sind.

Im Gegensatz zu einer herkömmlichen 12V-Kfz-Batterie verwendet die Batterieanordnung 1 die Kraftfahrzeugkarosserie nicht als Rückleiter. Vielmehr weist die Batterieanordnung 1 einen plusseitigen Anschluss 4 und einen minusseitigen Anschluss 5 auf, die jeweils über elektrisch isolierte Leitungen 6, 7 und einen Antriebsumrichter 8 mit einem elektrischen Antriebsmotor 9 verbunden sind.

Darüber hinaus weist die Batterieanordnung 1 zwischen den beiden Batterien 2, 3 einen elektrischen Verbindungspunkt 10 auf, der über eine Parallelschaltung aus einem Kondensator C und einem Widerstand R mit dem Massepotential GND verbunden ist.

Die Verbindung zwischen dem Verbindungspunkt 10 einerseits und dem Massepotential GND andererseits verhindert, dass das ansonsten schwimmende elektrische Potential der Batterieanordnung 1 im Betrieb wegdriftet. Dieses störende Wegdriften kann zum einen durch Gleichanteile und zum anderen durch Wechselanteile verursacht werden. Der Kondensator C verhindert hierbei, dass die Wechselanteile das Potential wegdriften lassen, während der Widerstand R dafür sorgt, dass etwaige Gleichanteile das Potential der Batterieanordnung 1 wegdriften lassen.

Die Erfindung ist nicht auf das vorstehend beschriebene bevorzugte Ausführungsbeispiel beschränkt. Vielmehr ist eine Vielzahl von Varianten und Abwandlungen denkbar, die ebenfalls von dem Erfindungsgedanken Gebrauch machen und deshalb in den Schutzbereich der Ansprüche fallen. Darüber hinaus beansprucht die Erfindung auch Schutz für den Gegenstand und die Merkmale der Unteransprüche.

### Bezugszeichenliste:

- 1: Batterieanordnung
- 2: Batterie
- 3: Batterie
- 4: Plusseitiger Anschluss der Batterieanordnung
- 5: Minusseitiger Anschluss der Batterieanordnung
- 6: Leitung
- 7: Leitung
- 8: Antriebsumrichter
- 9: Antriebsmotor
- 10: Verbindungspunkt
- C: Kondensator
- R: Widerstand
- GND: Massepotential

## Patentansprüche

1. Batterieanordnung (1) für ein elektrisch antreibbares Kraftfahrzeug, mit
a) zwei elektrischen Batterien (2, 3), die elektrisch in Reihe geschaltet sind,
b) einem plusseitigen Anschluss (4) zum Anschluss eines elektrisch isolierten Hinleiters (6), der über einen Antriebsumrichter (8) zu einem elektrischen Antriebsmotor (9) führt,
c) einem minusseitigen Anschluss (5) zum Anschluss eines elektrisch isolierten Rückleiters (7) von dem elektrischen Antriebsmotor (9) über den Antriebsumrichter (8),
d) einem elektrischen Verbindungspunkt (10) zwischen den elektrischen Batterien (2, 3),
e) einem Massepotential (GND) in Form einer Kraftfahrzeugkarosserie, wobei der plusseitige Anschluss (4) und der minusseitige Anschluss (5) der Batterieanordnung (1) elektrisch von dem Massepotential (GND) getrennt ist, so dass die Batterieanordnung (1) an sich ein schwimmendes elektrisches Potential aufweist, und
f) einer Parallelschaltung, die den elektrischen Verbindungspunkt (10) der Batterieanordnung (1) mit dem Massepotential (GND) verbindet,
**dadurch gekennzeichnet,**
g) **dass** die zwei elektrischen Batterien (2, 3) jeweils für eine Batteriespannung von 250V-400V ausgelegt sind, und
h) **dass** der Verbindungspunkt (10) zwischen den beiden elektrischen Batterien (2, 3), der zur elektrischen Kontaktierung der Batterieanordnung (1) genutzt wird, zur Erhaltung des Massebezugs der Batterieanordnung (1) mit dem Massepotential (GND) verbunden ist, um das Potential zwischen der Plusseite und der Minusseite festzuhalten, so dass der Verbindungspunkt (10) und damit auch das Potential der Batterieanordnung (1) an das Massepotential (GND) angebunden ist, wobei die Verbindung zwischen dem Verbindungspunkt (10) der Batterieanordnung (1) und dem Massepotential (GND) durch die Parallelschaltung erfolgt, um ein Wegdriften des schwimmenden elektrischen Potentials der Batterieanordnung (1) durch Gleichanteile und Wechselanteile zu verhindern.

2. Batterieanordnung nach Anspruch 1, **dadurch gekennzeichnet, dass** der Verbindungspunkt (10) durch die Parallelschaltung aus einem Kondensator (C) und einem hochohmigen Widerstand (R) mit dem Massepotential (GND) verbunden ist.

3. Batterieanordnung (1) nach einem der vorhergehenden Ansprüche,
**dadurch gekennzeichnet,**
a) **dass** die elektrischen Batterien (2, 3) wieder aufladbar sind, und/oder
b) **dass** die elektrischen Batterien (2, 3) elektrochemische Batterien (2, 3) sind, insbesondere Lithium-Ionen-Batterien (2, 3).

4. Antriebsbordnetz mit einer Batterieanordnung nach einem der vorhergehenden Ansprüche.

5. Kraftfahrzeug (1), insbesondere Nutzfahrzeug, insbesondere Lastkraftwagen oder Omnibus, mit einem Antriebsbordnetz nach Anspruch 4.

## Claims

1. A battery arrangement (1) for an electrically driveable motor vehicle, comprising
a) two electric batteries (2, 3) which are connected electrically in series,
b) a positive-side connection (4) for connecting an electrically insulated forward conductor (6) which leads via a drive converter (8) to an electric drive motor (9),
c) a negative-side connection (5) for connecting an electrically insulated return conductor (7) from the electric drive motor (9) via the drive converter (8),
d) an electrical connecting point (10) between the electric batteries (2, 3),
e) an earth potential (GND) in the form of a motor vehicle body, wherein the positive-side connection (4) and the negative-side connection (5) of the battery arrangement (1) are electrically isolated from the earth potential (GND), so that the battery arrangement (1) has a floating electrical potential per se, and
f) a parallel circuit which connects the electrical connecting point (10) of the battery arrangement (1) to the earth potential (GND),
**characterized**
g) **in that** the two electrical batteries (2, 3) are each designed for a battery voltage of 250 V-400 V, and
h) **in that** the connecting point (10) between the two electric batteries (2, 3), which is used for making electrical contact with the battery arrangement (1), is connected to the earth potential (GND) for obtaining the earth reference of the battery arrangement (1) in order to fix the potential between the positive side and the negative side so that the connecting point (10) and therefore also the potential of the battery arrangement (1) are connected to the earth potential (GND), wherein the connection between the connecting point (10) of the battery arrangement (1) and the earth potential (GND) is made by the parallel circuit in order to prevent the floating electrical potential of the battery arrangement (1) drifting away through the DC components and AC components.

2. The battery arrangement according to Claim 1, **characterized in that** the connecting point (10) is connected to the earth potential (GND) by the parallel circuit comprising a capacitor (C) and a high-impedance resistor (R).

3. The battery arrangement (1) according to one of the preceding claims,
**characterized**
a) **in that** the electric batteries (2, 3) are rechargeable, and/or
b) **in that** the electric batteries (2, 3) are electrochemical batteries (2, 3), in particular lithium-ion batteries (2, 3).

4. An on-board drive electrical system comprising a battery arrangement according to one of the preceding claims.

5. A motor vehicle (1), in particular utility vehicle, in particular heavy goods vehicle or bus, comprising an on-board drive electrical system according to Claim 4.

## Revendications

1. Agencement de batterie (1) pour un véhicule automobile à entraînement électrique, comprenant
a) deux batteries électriques (2, 3) connectées électriquement en série,
b) une borne côté plus (4) pour le raccordement d'un conducteur sortant (6) isolé électriquement, qui conduit par le biais d'un convertisseur d'entraînement (8) à un moteur électrique d'entraînement (9),
c) une borne côté moins (5) pour le raccordement d'un conducteur de retour (7) isolé électriquement du moteur électrique d'entraînement (9) par le biais du convertisseur d'entraînement (8),
d) un point de connexion électrique (10) entre les batteries électriques (2, 3),
e) un potentiel de masse (GND) sous la forme d'une carrosserie de véhicule automobile, dans lequel la borne côté plus (4) et la borne côté moins (5) de l'agencement de batterie (1) sont électriquement isolées du potentiel de masse (GND) de manière à ce que l'agencement de batterie (1) présente lui-même un potentiel électrique flottant, et
f) un circuit parallèle qui relie le point de connexion électrique (10) de la batterie (1) au potentiel de masse (GND), **caractérisé**
g) **en ce que** les deux batteries électriques (2, 3) sont respectivement conçues pour une tension de batterie de 250V-400V, et
h) **en ce que** le point de connexion (10) entre les deux batteries électriques (2, 3), qui sert à établir le contact électrique avec le dispositif de batterie (1), est relié au potentiel de masse (GND) pour obtenir la référence de masse du dispositif de batterie (1), afin de maintenir le potentiel entre le côté plus et le côté moins, de manière à ce que le point de connexion (10) et par conséquent également, le potentiel de l'agencement de batterie (1), soit raccordé au potentiel de masse (GND), dans lequel la connexion entre le point de connexion (10) de l'agencement de batterie (1) et le potentiel de masse (GND) est réalisée par le raccordement en parallèle afin d'éviter que le potentiel électrique flottant de l'agencement de batterie (1) ne dérive du fait des composantes continues et des composantes alternatives.

2. Agencement de batterie selon la revendication 1, **caractérisé en ce que** le point de connexion (10) est relié au potentiel de masse (GND) par le raccordement en parallèle d'un condensateur (C) et d'une résistance à haute impédance (R).

3. Agencement de batterie (1) selon l'une des revendications précédentes, **caractérisé**
a) **en ce que** les batteries électriques (2, 3) sont rechargeables, et/ou
b) **en ce que** les batteries électriques (2, 3) sont des batteries électrochimiques (2, 3), en particulier des batteries au lithium-ion (2, 3).

4. Circuit électrique d'entraînement comportant un agencement de batterie selon l'une des revendications précédentes.

5. Véhicule automobile (1), en particulier véhicule utilitaire, en particulier camion ou autobus, comportant un circuit électrique d'entraînement selon la revendication 4.
